# EUROPEAN PATENT APPLICATION

(11) **EP 1 465 105 A1**
(43) Date of publication of application: **06.10.2004**
(21) Application number: 03748623.0
(22) Date of filing: 30.09.2003
(51) Int. Cl.: G06K 9/22

(54) **IMAGE CORRECTION DEVICE AND IMAGE CORRECTION METHOD**

(30) Priority: 30.09.2002 JP 2002286766; 23.10.2002 JP 2002308254
(71) Applicant: MATSUSHITA ELECTRIC INDUSTRIAL CO., LTD., Kadoma-shi, Osaka 571-8501 (JP)
(72) Inventor: MATSUYAMA, Yoshiyuki, Yokohama-shi, Kanagawa 226-0015 (JP); NISHIZAWA, Masato, Yokohama-shi, Kanagawa 241-0801 (JP); UEKI, Chihiro, Yokohama-shi, Kanagawa 223-0066 (JP)
(74) Representative: Grünecker, Kinkeldey, Stockmair & Schwanhäusser Anwaltssozietät
(86) International application number: PCT/JP2003/012518
(87) International publication number: WO 2004/029867

(57) **Abstract**

An image correction apparatus includes: an image input part to which an image including plural character element rows are input; a row detection part for detecting a predetermined character element row from the plural character element rows; a correction amount calculating part for performing calculation of a position correction amount in a column direction with respect to each pixel column on the predetermined character element row; and a position correction part for correcting a position of each pixel column of the image so as to move it in the column direction based on the position correction amount calculated with respect to each pixel column in a predetermined direction.

## Description

### Technical Field

The present invention relates to an image correction apparatus and an image correction method for correcting a slant or meandering of a character row and the like produced in an image obtained by shooting an original such as a document by a hand scanner and the like.

### Background Art

Conventionally, various technologies for performing character recognition by shooting an original such as a document by a scanner and the like and performing OCR (Optical Character Recognition) using the shot image have been proposed.

Specifically, in an apparatus adopting a system in which an user moves a relatively compact scanner such as a hand scanner over the original to shoot an image, depending on the handling of the user, it is difficult to scan the scanning direction at the time of shooting in a constant direction relative to the alignment direction of characters etc. of the original. On this account, sometimes a slant or meandering occurs in the resultant shot image compared to the original. As a result, when the degree of the slant or meandering is large, there is a problem that the characters can not be cut out correctly and the character recognition rate is reduced.

As a method for correcting such slant or meandering of an image, for example, a method for generating a projection profile by making a character image into image data consisting of an aggregate of pixels arranged in a two-dimensional manner, binarizing brightness values with respect to each pixel to form two dimensional binarized image data, setting a large number of scan lines mutually parallel to each pixel to perform scanning, accumulating data representing the character image of the binarized image data with respect to each scan line, and obtaining a distribution in a direction perpendicular to the scan lines with respect to the accumulated value, and for obtaining an amount of rotation correction based on the dispersion value of the projection profile has been proposed (for example, see Publication of Japanese Patent No. 3108979).

However, in the image correction method as described above, since shift is performed in units of character elements, the meandering with respect to each character can be corrected but the distortion of the character element itself can not be corrected, and thus, there is a problem that suitable character recognition can not be performed in the subsequent processing such as OCR.

### Disclosure of the Invention

The invention is objected to provide an image correction method capable of correcting a slant or meandering of a character element row as well as correcting the distortion of the character element itself in light of the problems.

An image correction apparatus of the invention is characterized by including: an image input part to which an image including plural character element rows are input; a row detection part for detecting a predetermined character element row from the plural character element rows; a correction amount calculating part for performing calculation of a position correction amount in a column direction with respect to each pixel column on the predetermined character element row; and a position correction part for correcting a position of each pixel column of the image so as to move it in the column direction based on the position correction amount calculated with respect to each pixel column in a predetermined direction.

According to such constitution, correction is performed on all of the pixel columns constituting the image to move them in the column direction, and thereby, not only the meandering and slant of character element rows can be corrected, but also the distortion of each character element can be corrected.

Further, the row detection part may have a histogram generating part for generating an integrated histogram along a row direction of the image, and detect the longest character element row based on the integrated histogram.

According to such constitution, by the simple processing of calculating the integrated histogram of the image, the predetermined character element row the position correction amount of which should be calculated can be selected while suppressing the load on the computation part.

Furthermore, the row detection part may have a pixel position extracting part for extracting a pixel position where a value of the integrated histogram generated in the histogram generating part becomes the maximum, and detect the longest character element row based on the pixel position.

According to such constitution, the predetermined character element row can be detected by detecting character element row including the pixel position where the value of the integrated histogram becomes the maximum.

Moreover, the row detection part may have a range identifying part for identifying a pixel position range where the value of the integrated histogram falls within a predetermined range as the longest character element row from the pixel position extracted in the pixel position extracting part.

According to such constitution, the predetermined character element row can be identified simply and clearly by determining the predetermined range in advance.

Further, the correction amount calculating part may have an end position detection part for detecting an end position in the column direction with respect to each character element of the predetermined character element row, and calculate the position correction amount based on a displacement amount of the end position with respect to each character element row.

According to such constitution, since the processing for detecting the end position in the column direction with respect to each character element of the predetermined character element row is performed, the load on the computing part can be reduced compared to the case where computation processing is performed with respect to all of the character element rows in the image.

Furthermore, the correction amount calculating part may calculate the displacement amount based on an envelope curve connecting the end positions detected by the end position detection part with respect to each character element.

According to such constitution, the displacement amount can be calculated by the simple processing of calculating the envelope curve on the predetermined character element row with respect to each character element.

Further, the image correction apparatus may include: an image input part to which an image including plural character element rows are input; a histogram generating part for generating an integrated histogram along a row direction of the image; a pixel position extracting part for extracting a pixel position where a value of the integrated histogram generated in the histogram generating part becomes the maximum; a range identifying part for identifying a pixel position range where the value of the integrated histogram falls within a predetermined range as a range of the longest character element row from the pixel position extracted in the pixel position extracting part; an end position detection part for detecting an end position in the column direction in the image with respect to each character element of the longest character element row; a position correction amount calculating part for calculating a displacement amount of the end positions with respect to each character element row based on an envelope curve connecting the end positions detected by the end position detection part with respect to each character element row; and a position correction part for correcting the image with respect to each pixel column so as to move it in the column direction based on the position correction amount.

According to such constitution, not only the meandering and slant of character element rows can be corrected, but also the distortion of each character element can be corrected.

Next, the image correction apparatus of the invention is characterized by including: an image input part to which a first image including plural character element rows are input; an expanded row generating part for generating a second image including plural expanded rows by expanding the first image in a row direction; a starting position detection part for detecting a starting position of the expanded row in the column direction with respect to each pixel column of the second image; a correction amount calculating part for calculating a position correction amount in a column direction with respect to each pixel column of the second image; and a position correction part for correcting a position of each pixel column of the first image so as to move it in the column direction based on the position correction amount.

According to such constitution, since the starting position of the expanded row in the column direction is detected to determine the range of the pixel positions constituting the character element row, there is a lower possibility that the character element rows superpose and the character element rows can be separated with higher accuracy compared to the case where the range of existence of the entire character is detected. Therefore, even when the character element rows are shot slanted to some extent, the slant as well as the meandering can be corrected simultaneously.

Further, the second image may be a binarized image having brightness values expressed by a value of 0 or 1.

According to such constitution, used amount of memory can be reduced, processing can be performed rapidly, and the load on the computing part can be reduced, and thereby, mounting on the portable information equipment and the like can be made easier.

Furthermore, the starting position detection part may perform detection of the starting position of the expanded row in the column direction by, while moving a pixel of interest in the column direction, detecting a brightness value of the pixel of interest with respect to each pixel column, and, when equal to or more than a predetermined number of pixels having brightness values of 0 continue, setting a position where the pixel having the brightness value of 0 is detected for the first time as the starting position.

According to such constitution, since the possibility that the noise information due to dirt or the like is regarded as a character element can be made lower, more suitable image correction can be performed.

Moreover, the starting position detection part may perform detection of the starting position of the expanded row in the column direction with respect to each of plural expanded rows, and the correction amount calculating part may calculate the position correction amount based on an average value of a starting position distribution of each of the plural expanded rows in the column direction.

According to such constitution, the influence by the character such as "j" or "p" protruding more downward than other characters is reduced, and thereby, more suitable image correction can be performed.

Next, the image correction apparatus of the invention is characterized by including: an image input part to which a binarized first image including plural character element rows are input; an expanded row generating part for generating a second image including plural expanded rows by expanding the first image in a row direction; a starting position detection part for, while moving a pixel of interest in a column direction, detecting a brightness value of the pixel of interest with respect to each pixel column of the second image, and, when equal to or more than a predetermined number of pixels having brightness values of 0 continue, detecting a position where the pixel having the brightness value of 0 is detected for the first time as a starting position of the expanded row; a correction amount calculating part for calculating a position correction amount with respect to each pixel column of the second image based on an average value of a starting position distribution of the plural expanded rows in the column direction; and a position correction part for correcting the first image with respect to each pixel column so as to move it in the column direction based on the position correction amount.

According to such constitution, since the starting position of the expanded row is detected to determine the range of the lower end position of the character element row, there is a lower possibility that the character element rows superpose and the character element rows can be separated with higher accuracy compared to the case where the range of existence of the entire character is detected. Therefore, even when the character element rows are shot slanted to some extent, the slant as well as the meandering can be corrected simultaneously.

Next, information equipment and a cellular phone device including the image correction apparatus of the invention may be provided.

According to such constitution, since characters and the like, the slant, meandering, and distortion of character elements of which are image corrected for easy character recognition etc. can be input, especially in the information equipment and cellular phone device equipped with the character recognition such as an OCR function, the accuracy of character reading can be made higher.

Next, the image correction method of the invention is characterized by including: a first step for detecting a predetermined character element row from an image including plural character element rows; a second step for calculating a position correction amount with respect to each pixel column of the predetermined character element row; and a third step for correcting the image with respect to each pixel column so as to move it in the column direction based on the position correction amount.

According to such constitution, correction is performed on all of the pixel columns constituting the image to move them in the column direction, and thereby, not only the meandering and slant of character element rows can be corrected, but also the distortion of each character element can be corrected.

Further, the image correction method of the invention may include: a first step for generating a second image including plural expanded rows by expanding a first image including plural character element rows in a row direction; a second step for detecting a starting position of the expanded row in a column direction with respect to each pixel column of the second image; and a third step for correcting a position of the first image so as to allow starting positions of the expanded row in the column direction to align with each other based on information of the starting positions of the expanded row in the column direction.

According to such constitution, since the starting position of the expanded row in the column direction is detected to determine the range of the lower end positions constituting the character element row, there is a lower possibility that the character element rows superpose and the character element rows can be separated with higher accuracy compared to the case where the range of existence of the entire character is detected. Therefore, even when the character element rows are shot slanted to some extent, the slant as well as the meandering can be corrected simultaneously.

### Brief Description of the Drawings

Fig. 1 is a flowchart showing processing steps of an image correction method in the first embodiment of the invention.
Fig. 2 is a block diagram showing an example of the constitution of an image correction apparatus in the first embodiment of the invention.
Fig. 3A shows an example of an original image in the first embodiment of the invention.
Fig. 3B shows an example of a slant corrected image in the first embodiment of the invention.
Fig. 4 shows an example of a horizontal integrated histogram in the first embodiment of the invention.
Fig. 5 shows an example of a detection result of a black pixel lower end position in the first embodiment of the invention.
Fig. 6 shows an example of a detection result of a vertical position displacement amount in the first embodiment of the invention.
Fig. 7 shows a meandering corrected image in the first embodiment of the invention.
Fig. 8 is a flowchart showing the processing procedure of an image correction method in the second embodiment of the invention.
Fig. 9 is a block diagram showing an example of the constitution of an image correction apparatus in the second embodiment of the invention.
Fig. 10 shows an example of an original image in the second embodiment of the invention.
Fig. 11 shows an example of a binarized image in the second embodiment of the invention.
Fig. 12 is a flowchart showing the steps of the horizontal expansion processing in the second embodiment of the invention.
Fig. 13 is a schematic diagram for explanation of the contents of the horizontal expansion processing in the second embodiment of the invention.
Fig. 14 shows an example of a horizontally expanded image in the second embodiment of the invention.
Fig. 15 is a flowchart showing the steps of starting position detection processing of the expanded character row in the second embodiment of the invention.
Fig. 16 shows a histogram of the starting position of the expanded character row in the second embodiment of the invention.
Fig. 17 shows a distribution of the starting position of the expanded character row in the second embodiment of the invention.
Fig. 18 shows a relative displacement amount distribution of the starting point of the expanded character row in the second embodiment of the invention.
Fig. 19 shows an example of a corrected image in the second embodiment of the invention.
Fig. 20A is a front view of a cellular phone device equipped with the image correction apparatus in the third embodiment of the invention.
Fig. 20B is a perspective view of a main part showing an end part where the image correction apparatus is mounted in the third embodiment of the invention.

### Best Mode for Carrying out the Invention

Hereinafter, embodiments of the invention will be described in detail using the drawings.

### (First Embodiment)

First, as the first embodiment of the invention, an image correction apparatus and an image correction method of the invention will be described.

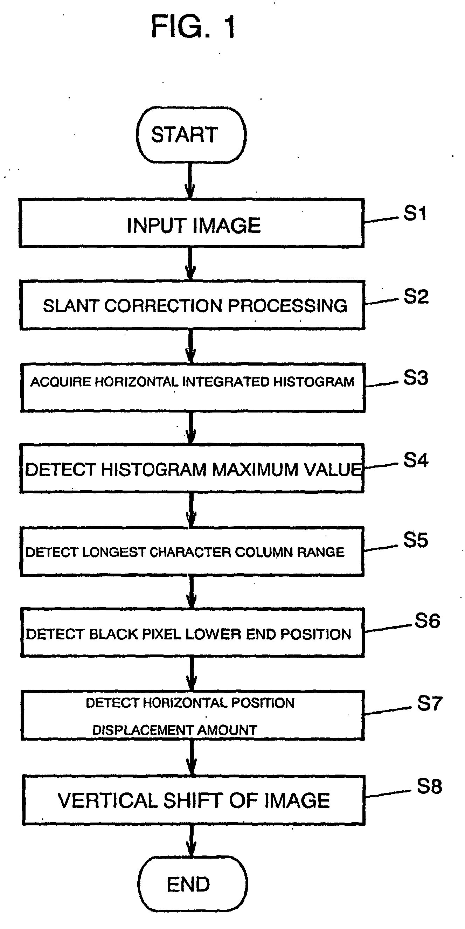

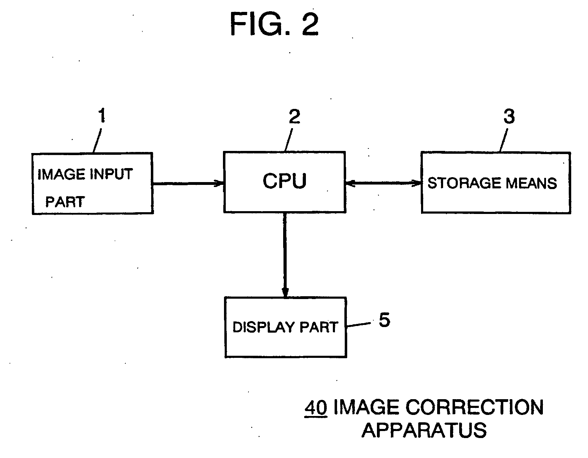

Fig. 1 is a flowchart showing processing steps of an image correction method in the first embodiment of the invention. Further, Fig. 2 shows an example of the constitution of image correction apparatus 40 for executing the image correction method in the first embodiment of the invention.

As shown in Fig. 2, image correction apparatus 40 in the first embodiment of the invention includes image input part 1 for reading an original such as a character and graphic and inputting an image thereof, CPU 2 connected to image input part 1 for performing various kinds of processing as described below based on the image input to image input part 1, storage means 3 such as a frame memory for storing the image input to image input part 1, and display part 5 for displaying various kinds of computed result information or necessary information to an user.

As image input part 1, a device selected from devices such as an optical device used for the publicly known hand scanner can be used.

Storage means 3 is connected to CPU 2 and, as a storage medium thereof, the publicly known flash memory and the like can be used.

Display part 5 can arbitrarily be selected from the publicly known display devices, for example, an LCD (Liquid Crystal Display), an EL (Electro-Luminescent), a CRT (Cathode Ray Tube), etc.

Next, the processing steps of the image correction method in the first embodiment of the invention will be described according to Fig. 1.

First, an image shot in image input part 1 (hereinafter, referred to as "original image") is loaded (developed) in storage means 3 via the CPU 2 (S1).

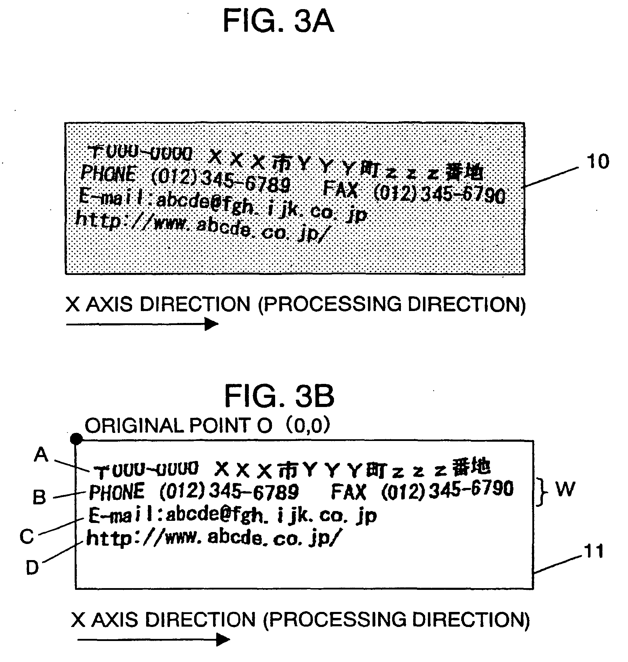

An example of original image 10 is shown in Fig. 3A. Original image 10 shown in Fig. 3A is an image obtained by combining partial images shot by image input part 1 and the direction of its character row is slanted by being greatly affected by the angular difference between the scanning direction when the user manually scans and the row direction of the characters. Further, since the trail as image input part 1 is moved over the original is meandered relative to the character row direction, original image 10 shown in Fig. 3A is meandered. Note that, in the embodiment, original image 10 is an aggregate of pixels arranged in a two-dimensional manner and a monochrome image of pixels each having a multilevel (256 levels of gray) brightness value.

Further, in the embodiment, as image shooting means in image input part 1, a CCD of 256 × 16 pixels is used. Furthermore, as storage means 3 for image development, a frame memory of the horizontal direction relative to the sheet surface of Fig. 3A (lateral) × the vertical direction relative to the sheet surface (longitudinal) = 1000 × 400 pixels is used.

Then, CPU 2 executes processing of correcting the slant of the entire image relative to original image 10 stored in storage means 3 (S2). The invention is not for restricting anything with respect to the processing of correcting the slant, but publicly known methods can be used therefor. For example, in JP-A-1-156887, a method for rotating original image 10 by rotating original image 10 to plural angles, calculating a histogram along the row direction, and determining an angle at which the width of the histogram becomes the minimum as an angle to which original image 10 should be rotated is disclosed. Such method can be used, or any other publicly known method may be used.

In Fig. 3B, an example of slant corrected image 11 on which such slant correction processing has been performed is shown. Here, the example in which slant corrected image 11 is constituted by black pixels having a density value of "1" and white pixels having a density value of "0", i.e., so-called binarized image is shown. Slant corrected image 11 has four character rows ( A to D in Fig. 3 ). Note that, in the specification, character rows row refers to 3). Note that, in the specification, the character row refers to the connection of character elements along the direction in which characters are written (for example, the X axis direction in Fig. 3B).

By the comparison between slant corrected image 11 and original image 10, it is seen that the slant of the entire image has been corrected, but the above described meandering remains. As below, a method for correcting meandering of an image in the embodiment will be described.

Turning to Fig. 1 again, CPU 2 performs calculation of an integrated histogram on slant corrected image 11 stored in storage means 3 by counting the number of black pixels (adding density values) along horizontal direction with respect to each horizontal line with respect to each vertical pixel position in Fig. 3B (S3).

Note that, in the specification, the horizontal pixel alignment in the image data constituting original image 10 is referred to as "horizontal line", and the vertical pixel alignment is referred to as "vertical line".

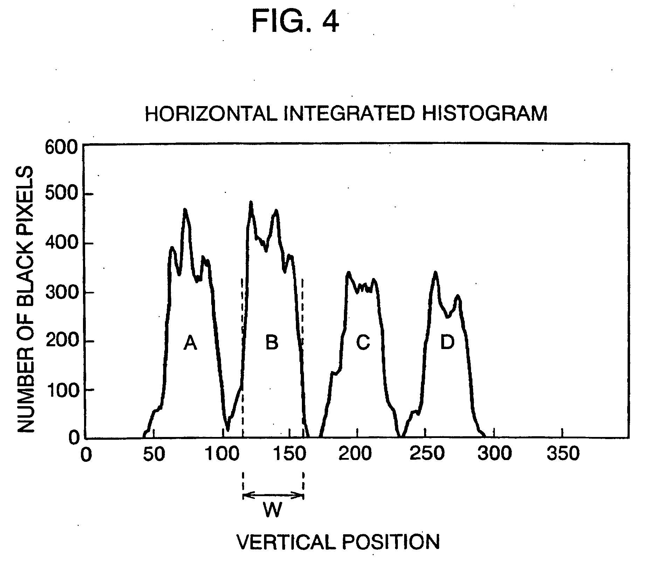

Fig. 4 shows a result obtained by calculating a horizontal integrated histogram with respect to slant corrected image 11 shown in Fig. 3B. In Fig. 4, the lateral axis indicates the position of a pixel along the vertical direction of the image (indicates an example in which the upper left corner relative to the sheet surface in Fig. 3B is set as an original point O), and along the longitudinal axis, the numbers of black pixels are plotted.

As seen from Fig. 4, in the embodiment, it is known that the calculated black pixel histogram is divided into four crest parts (A to D). These crest parts correspond to the above described four character rows (A to D) in slant corrected image 11 shown in Fig. 3B.

Subsequently, CPU 2 calculates the vertical pixel position where the number of black pixels becomes the maximum from the horizontal integrated histogram that has been calculated in the above described step S3, and regards the crest part including the maximum value as the longest character row (S5). In the embodiment, since crest part B includes the vertical pixel position where the number of black pixels becomes the maximum, character row B is regarded as the longest character row.

Further, CPU 2 determines the vertical width of the corresponding character row with respect to crest part B, which has been regarded as the longest (S5). Specifically, a vertical pixel position range where the number of black pixels becomes a predetermined ratio, R% relative to the maximum value (the range shown by W in Fig. 4) is determined as longest character row range W. R is set to a value that enables separation from adjacent character rows. Practically, separation of character rows can be ensured by setting R to about 30%.

By the processing steps heretofore, longest character row range W along the vertical direction for determining an amount to be meandering corrected can be determined.

Next, in the vertical pixel position range determined as longest character row range W, CPU 2 scans slant corrected image 11 shown in Fig. 3B from the original point along the X axis direction sequentially with respect to each one vertical line from the lower side relative to the sheet surface in Fig. 3B, and determines the position where a black pixel is detected for the first time as a black pixel lower end position. The processing is performed with respect to all of the vertical lines (S6).

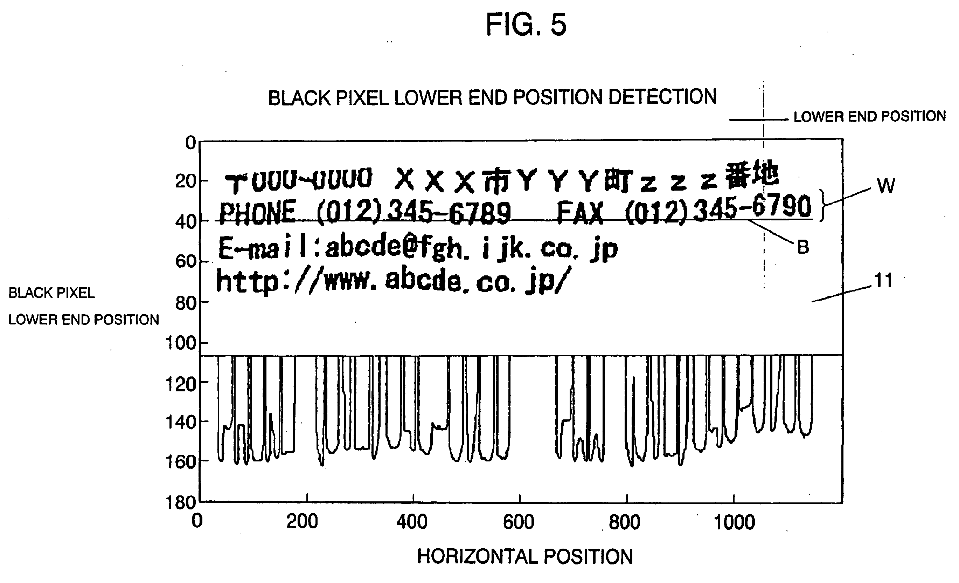

Fig. 5 shows a result obtained by detecting the black pixel lower end position with respect to all of the vertical lines of slant corrected image 11 shown in Fig. 3B. For simplicity of description, in Fig. 5, the slant corrected image 11 is displayed in a superimposing manner.

As seen from Fig. 5, it is known that the black pixel lower end position at the lowest end is detected with respect to each character element that constitutes the character row regarding the character row B (strictly, longest character row range W).

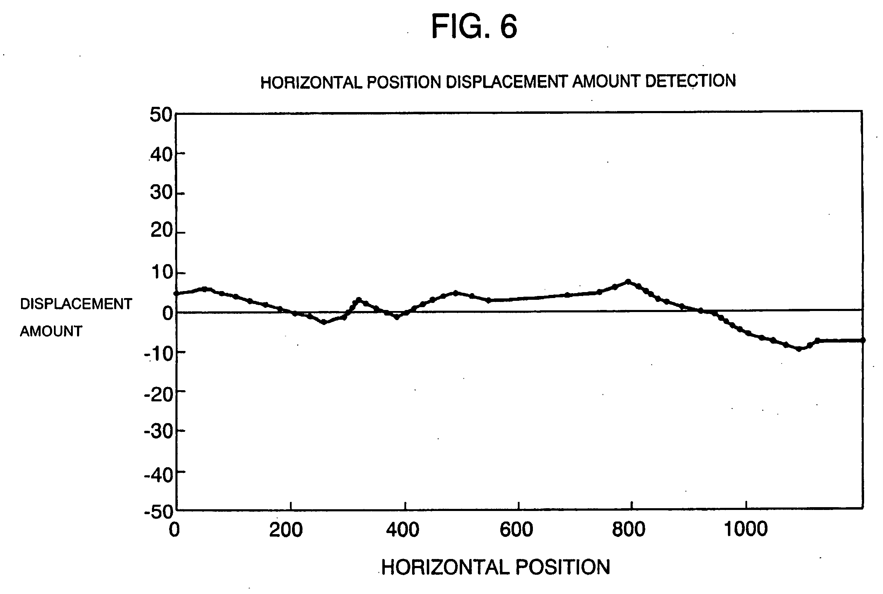

Turning to Fig. 1, then, CPU 2 calculates an envelope curve connecting the lowest points of the black pixel lower end positions relative to the sheet surface from the calculation result shown in Fig. 5 and determines it as a vertical displacement amount (S7). Specifically, assuming that the area sandwiched between the vertical lines with the black pixel lower end positions of "0" as one character element, the lowest black pixel lower end position is detected with respect to each area constituting each character element, the adjacent black pixel lower end positions with respect to each character are connected with straight lines, and the vertical position displacement amount to be vertically corrected is calculated with respect to each vertical line. An example of the detection result of the vertical position displacement amount is shown in Fig. 6.

Then, CPU 2 calculates the amount to be vertically displaced with respect to each vertical line based on the vertical position displacement amount shown in Fig. 6, vertically displaces with respect to each vertical line stored in storage means 3, and ends the processing (S8). By the way, the system in which display 5 displays the meandering corrected image to the user after this step may be adopted.

Thus, according to the image correction method or the image correction apparatus of the invention, since the correction is performed by detecting the black pixel lower end position with respect to each area regarded as one character, forming an envelope curve that connects the adjacent black pixel lower end positions with respect to character element, and performing correction by displacing all of the vertical lines based on the vertical position displacement amount, the distortion of character element itself can be improved.

By the way, in the above description, the example in which the respective processing steps from step S2 to step S8 are realized with software is shown. However, the invention is not limited to that, and at least one step from step S1 to step S8 may be realized with hardware having a function of each step.

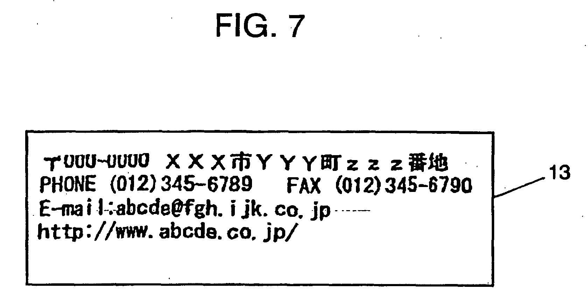

In Fig. 7, meandering corrected image 13 processed according to the image correction apparatus and the image correction method described in the embodiment is shown. As seen from Fig. 7, as compared to slant corrected image 11 shown in Fig. 3B, the degree of meandering of the character rows is drastically reduced. As described in the embodiment, it can be confirmed that the meandering of the entire image can be corrected by determining the amount to be corrected based on the longest character row and performing correction with respect to vertical lines that constitute the entire image.

As described above, according to the image correction apparatus or the image correction method of the embodiment, since the correction is performed with respect to the entire image by detecting the longest character row by horizontal histogram calculation and detecting the displacement amount to be corrected with respect to the character row, the processing can be performed more rapidly compared to the case where the displacement correction is performed with respect to all of the character lines that constitute the image.

Next, a specific example in which the recognition accuracy of the original is improved by the image correction apparatus or the image correction method of the embodiment.

The calculation of the correct reading ratio is performed by performing OCR processing in CPU 2 based on the image stored in storage means 3 and calculating the rate of the resulting correctly recognized characters. As a sample, recognition is performed using 20 business cards at random. The number of characters shot and subjected to OCR is 390 characters of telephone numbers and 1026 characters of mail addresses and URLs.

First, in the case of the telephone numbers in the business cards, relative to the correct reading rate when no correction is performed, about 20% of the correct reading rate can be improved by the image correction apparatus or the image correction method of the embodiment.

Further, with respect to the mail addresses and URLs in the business cards, relative to the correct reading rate when no correction is performed, about 25% of the correct reading rate can be also improved by the image correction apparatus or the image correction method of the embodiment, and higher correct reading rate can be obtained.

Furthermore, with respect to the entire of the telephone numbers, mail addresses and URLs in the business cards, relative to the correct reading rate when no correction is performed, about 23% of the correct reading rate can be also improved when the image correction of the invention is performed. It is conceivable that this is because the meandering of the character rows can be corrected as well as the distortion of the image of the character itself can be corrected according to the image correction apparatus or the image correction method of the invention.

### (Second Embodiment)

Next, as the second embodiment of the invention, another example of the image correction apparatus or the image correction method of the invention will be described.

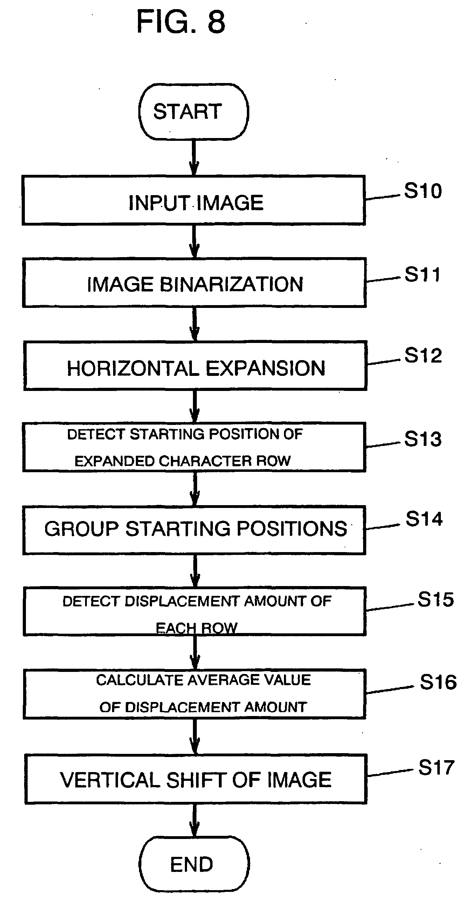

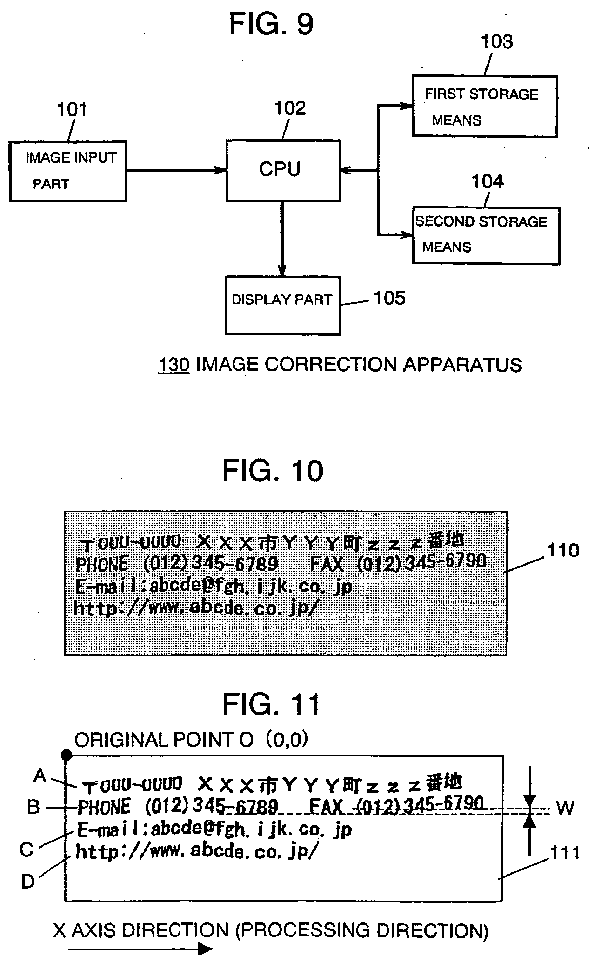

Fig. 8 is a flowchart showing the processing procedure of an image correction method in the second embodiment of the invention. Further, Fig. 9 is a block diagram showing an example of the constitution of image correction apparatus 130 for realizing the image correction method in the second embodiment of the invention.

As shown in Fig. 9, image correction apparatus 130 in the second embodiment of the invention includes image input part 101 for reading an original such as a character and graphic and inputting an image thereof, CPU 102 connected to image input part 101 for performing various kinds of processing as described below based on the image input to image input part 101, first storage means 103 for storing the image input to image input part 101 as image information of pixels arranged in a two-dimensional manner, further, second storage means 104 for storing the obtained image as a result of various kinds of computation processing by CPU 102, and display part 105 connected to CPU 102 for displaying various kinds of computed result information or necessary information to the user.

Note that, the image information of pixels in the invention refers to various kinds of information such as brightness information, color information, and density information with respect to pixels that constitute the image, and, in the embodiment, the brightness information of pixels is used.

As image input part 101, a device arbitrarily selected from devices such as an optical device used for the publicly known hand scanner can be used.

First storage means 103 and second storage means 104 are frame memory, respectively, and, as a storage medium thereof, the publicly known medium such as a flash memory can be used.

Display part 105 can arbitrarily be selected from the publicly known display devices, for example, an LCD (Liquid Crystal Display), an EL (Electro-Luminescent), a CRT (Cathode Ray Tube), etc.

Next, the processing steps when image correction apparatus 130 in the embodiment of the invention performs image correction will be described according to Fig. 8.

First, image shot in image input part 101 (hereinafter, referred to as "original image" ) 110 is developed as brightness information as image information of pixels arranged in a two-dimensional manner in first storage means 103 via CPU 102 (S10).

An example of original image 110 is shown in Fig. 10. Original image 110 shown in Fig. 10 is an image obtained by combining partial images shot by image input part 101 and, since the trail when image input part 101 is moved over the original is meandered relative to the character row, original image 110 shown in Fig. 10 is meandered.

Note that, in the embodiment, as described above, original image 110 is an aggregate of pixels arranged in a two-dimensional manner and a monochrome image of pixels each having a multilevel (256 levels of gray) brightness value.

Further, in the embodiment, as shooting means of image input part 101, a CCD of 256 × 16 pixels is used, and, as first storage means 103 for image development, a frame memory of the horizontal direction relative to the sheet surface (lateral) × the vertical direction relative to the sheet surface (longitudinal) = 1000 × 400 pixels in Fig. 10 is used.

Then, CPU 102 executes binarization processing of storing either value of 0 (black) or 1 (white) with respect to each pixel as brightness information using the publicly known method on original image 110 stored in first storage means 103 (S11). By the binarization processing, reduction in used amount of memory and speeding up of the processing are made possible, and the load on CPU 102 can be suppressed.

In Fig. 11, an example of binarized image 111 subjected to such binarization processing. The pixels that appear to be black are pixels in which the brightness value "0" is stored as brightness information, and the pixels that appear to be white are pixels in which the brightness value "1" is stored as brightness information. By the way, in the invention, any publicly known method can be used as the binarization processing method of images, there is no limitation.

Turning to Fig. 8, then, CPU 102 performs horizontal expansion processing for horizontally expanding the black pixel part of the image with respect to binarized image 111 stored in first storage means 103 (S12).

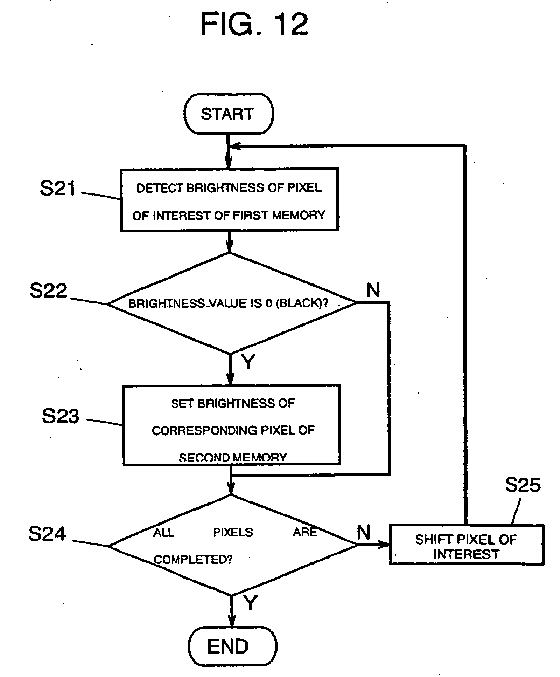

The horizontal expansion processing will be further described. Fig. 12 is a flowchart showing the steps of the horizontal expansion processing (expanded row generating means).

In Fig. 12, first, CPU 102 sets an arbitrary pixel in first storage means 103 as a pixel of interest. Practically, a pixel located at the most end of binarized image 111, i.e. , a pixel located on the original point 0 at the upper left of the sheet surface of Fig. 11 is set as the pixel of interest. Then, the brightness value of the pixel of interest is detected (S21).

Subsequently, CPU 12 judges whether the brightness value of the pixel of interest is 0 (black) or not (S22), if the brightness value of the pixel of interest is 0 (black), the brightness value of the pixels in a predetermined range forward and rearward of the corresponding pixel of interest along the processing direction in second storage means 104 is set to 0 (black) (S23). On the other hand, if the brightness value of the pixel of interest is not 0 (is 1), this processing is not performed.

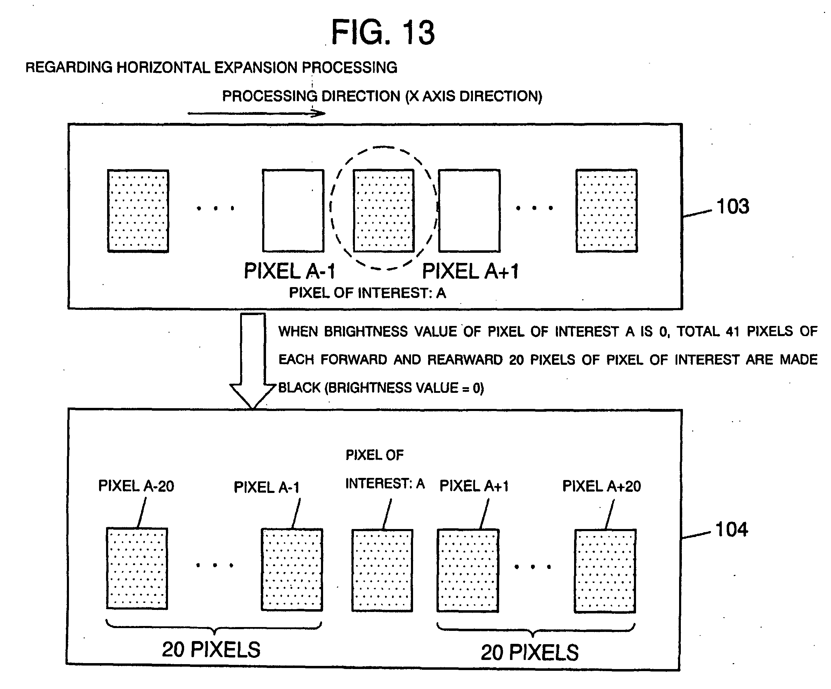

Step S23 will be described using Fig. 13. In Fig. 13, if the brightness value of a pixel of interest A in the first storage means 103 is 0 (black), with respect to the pixels in a predetermined range forward and rearward along the processing direction (in the embodiment, total 41 pixels including 20 pixels each for forward and rearward and the pixel of interest), the brightness values of the corresponding pixels in second storage means 104 are uniformly set to brightness value = 0 (black) regardless of their original brightness values. Note that, it is practically desirable that the predetermined range includes about 20 pixels forward and rearward.

Turning to Fig. 12, subsequently, CPU 102 judges whether the processing with respect to all of the pixels that constitute first storage means 103 is completed or not (S24), and, if the processing with respect to all of the pixels is completed, the processing is ended. On the other hand, if the processing with respect to all of the pixels is not completed, the pixel of interest is shifted along the processing direction in Fig. 11 (S25), and the processing returns to the step for detecting the brightness value of the pixel of interest (S21).

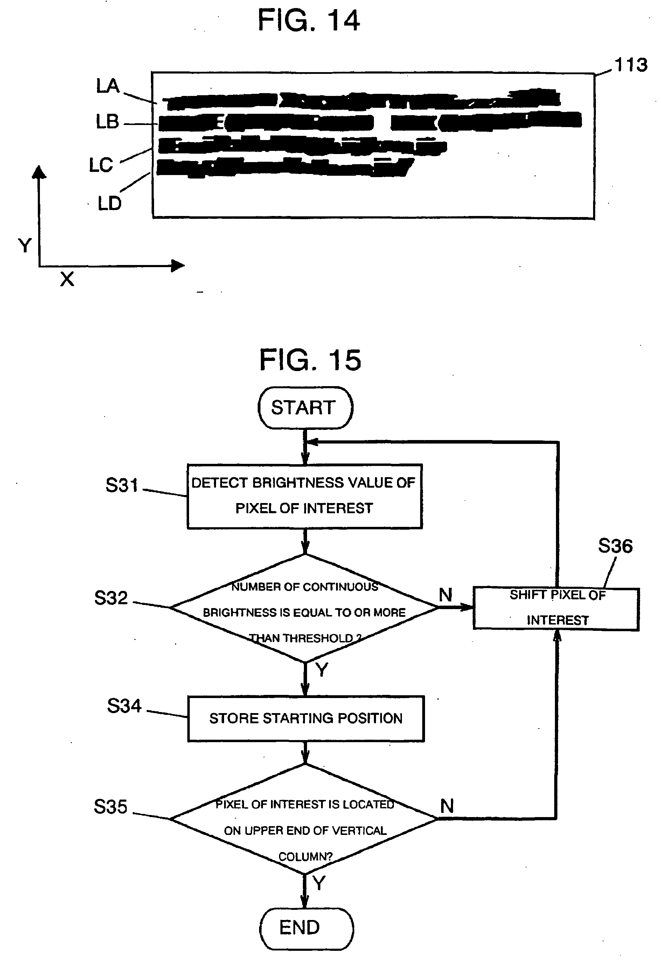

By such processing, horizontally expanded image 13 as shown in Fig. 14 can be obtained on the second storage means 104. Fig. 14 shows an example of horizontally expanded image 113 in the embodiment.

As shown in Fig. 14, horizontally expanded image 113 has plural expanded character rows. Note that, here, the expanded character row (expanded row) refers to a block of continuous pixels having brightness values of 0, i.e., black pixels. In the embodiment, four expanded character rows LA to LD of horizontally expanded image 113 correspond to four character rows A to D in binarized image 111, respectively.

Here, turning to Fig. 8, after the horizontal expansion processing (S12), CPU 102 detects the starting position of the black pixels along the vertical direction with respect to each expanded character row (S13). That is, CPU 102 scans from the leftmost vertical pixel column of horizontally expanded image 113 relative to the sheet surface in Fig. 14 (referring to the pixel alignment along the vertical direction (row direction) in the image) with respect to each vertical pixel column from lower side of Fig. 14 toward the Y axis direction and detects the pixel position where the black pixel is detected at the first time (hereinafter, referred to as "starting position") in the case where the continuation of the black pixels (brightness value = 0) continues over the predetermined number of pixels with respect to each expanded character row. That is, in horizontally expanded image 113 of the embodiment, the starting positions of four expanded character rows LA to LD are detected with respect to each vertical pixel column.

The detection method of the expanded character row will be described using Fig. 15. Fig. 15 is a flowchart showing the steps of starting position detection processing (starting position detection means) of the expanded character row in the embodiment of the invention.

In Fig. 15, first, CPU 102 sets a pixel of interest with respect to an arbitrary vertical pixel column of horizontally expanded image 113 stored in second storage means 104, and detects the brightness value with respect to each pixel of interest while shifting the pixel of interest (S31) . Note that, practically, the setting of the pixel of interest is performed from the lowermost pixel in Fig. 14.

Then, CPU 102 judges whether equal to or more than the predetermined number of the continuous black pixels are detected or not (S32), and, if equal to or more than the predetermined number of the continuous black pixels are detected, the position of the pixel where the black pixel stars for the first time is stored as a starting position of the expanded character row (S34). On the other hand, if less than the predetermined number of the continuous black pixels are detected, the continuation is regarded not as an expanded character row but noise information, and the pixel of interest is shifted (S36) and the processing proceeds to the starting position detection processing of the next expanded character row. Note that, it is practically desirable that the predetermined number includes approximately 20 pixels.

Then, whether the pixel of interest reaches the upper end of the vertical pixel column or not is judged (S35), if it reaches, the processing is ended.

The processing as described above is performed with respect to all of the vertical pixel columns (entire screen) that constitute horizontally expanded image 113. By such processing, a short continuation of black pixels is regarded as noise information, and thereby, only the information of the expanded character rows constituted by character rows can be drawn and processed and the constitution hardly affected by the noise information can be realized.

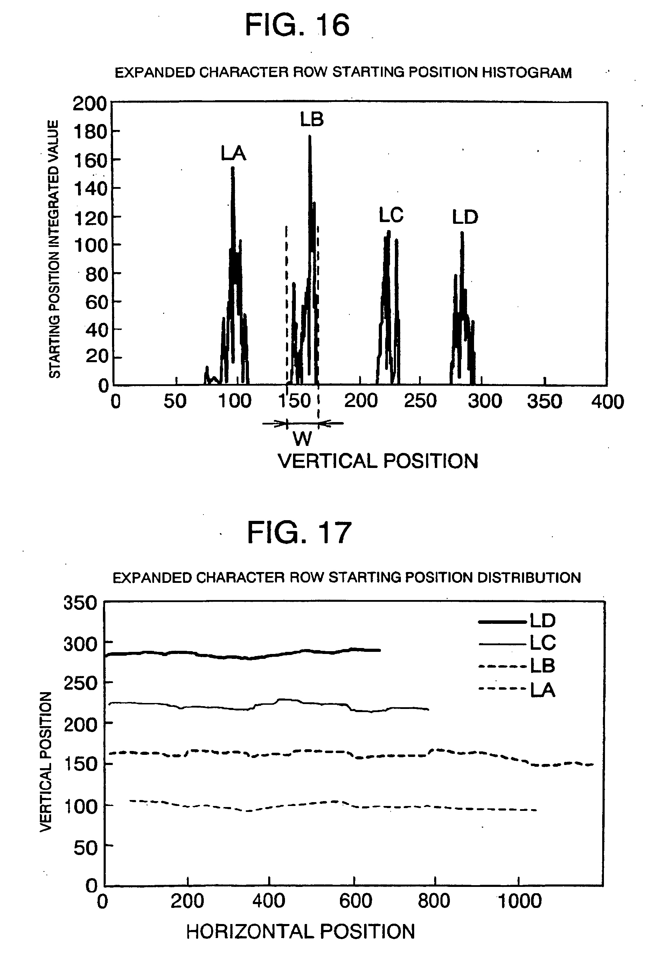

As described above, a result (histogram) obtained by plotting the vertical positions and the integrated values of the accumulated number of starting positions in the respective vertical positions from the obtained starting points of all of the expanded character rows as a result of performing starting position detection processing of the expanded character rows on all of the vertical pixel columns is shown in Fig. 16. Fig. 16 shows a distribution of the expanded character row starting points in the embodiment of the invention, and shows the range of the lower end positions of character rows.

Turning to Fig. 8, CPU 102 determines the range of the lower end position of each character row (as an example, the range W in Fig. 16) using the relationship shown in Fig. 16. The processing (row separating means) is obtained by detecting widths of crests having areas equal to or more than a certain value from the histogram shown in Fig. 16 (hereinafter, the processing is referred to as "grouping") (S14). In the embodiment, four crests exist as shown in Fig. 16, and these correspond to the ranges of existence of the starting positions of expanded character rows LA to LD, respectively.

Note that, in the step S14, in the case where the area of the crest of the histogram is less than the predetermined value, considered as noise information, the information of the integrated value is neglected. By such system, suitable starting position detection of the expanded character row with less influence of noise information can be performed.

Fig. 17 shows a distribution of the starting position with respect to each expanded character row when the grouping of the starting positions of the expanded character rows in the embodiment of the invention is performed. The lateral axis indicates the horizontal position of the expanded image in Fig. 14, and the longitudinal axis indicates the vertical position. In this manner, the lines show the starting points of four expanded character rows LD, LC, LB, and LA sequentially from the top, i.e., the lower end positions.

Thus, according to the image correction method and the image correction apparatus of the invention, since the ranges of the lower positions of the characters are not superposed and easily separated by the grouping of the starting positions of the expanded character rows, the separation of the character rows can be performed with high accuracy.

Turning to Fig. 8, then, CPU 102 calculates displacement amount to be vertically corrected on four expanded character rows LA to LD in Fig. 14 with respect to all of the vertical pixel columns (S15), and then, calculates the average value of the displacement amounts of four expanded character rows LA to LD (S16).

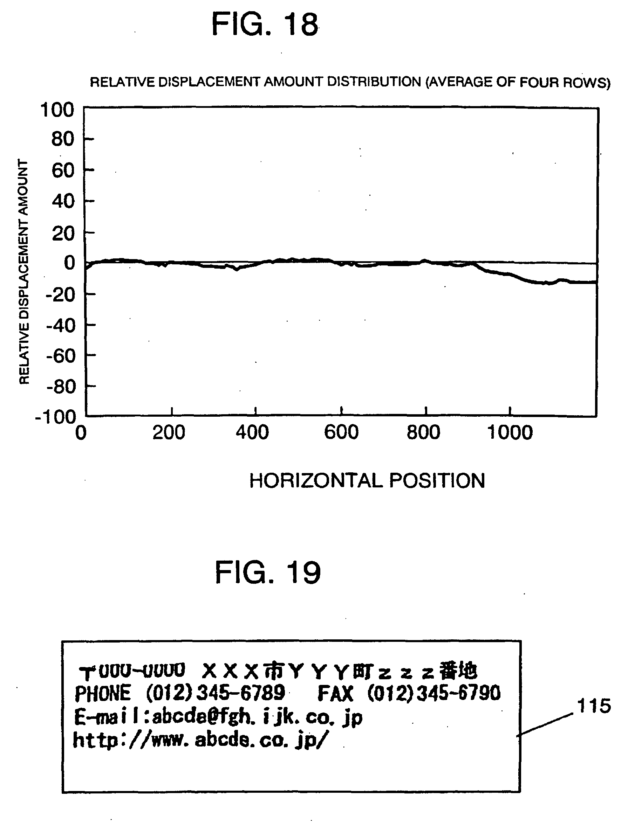

Fig. 18 shows a relative displacement amount distribution of the respective vertical pixel columns in the embodiment of the invention. The lateral axis indicates the horizontal position and the longitudinal axis indicates the relative displacement amount obtained by calculating the average value with respect to all of the character rows. By the relationship shown in Fig. 18, the displacement amount to be vertically corrected is determined with respect to each vertical pixel column.

In Fig. 8, CPU 102 (movement computing part) moves the respective vertical pixel columns of binarized image 111 stored in first storage means 103 along the vertical direction by the displacement amount based on the displacement amount average value, and ends the processing (S17).

In Fig. 19, an example of corrected image 115 as a result of performing image correction on original image 110 by image correction apparatus 130 in the embodiment of the invention is shown.

As seen from Fig. 19, compared to original image 110, it is known that both of the degrees of the slant and the meandering of the character rows are corrected. Thus, the slant and meandering are corrected by using the image correction apparatus of the invention, and thereby, reduction in recognition rate in the subsequent processing such as OCR can be suppressed.

By the way, in the above description, the example in which the respective processing steps from step S11 to step S17 are realized with software is shown. However, the invention is not limited to that, and at least one step from step S10 to step S17 may be realized with hardware having a function of each step.

According to the image correction apparatus of the invention, since the average value of the displacement amounts calculated with respect to each character row is used as the displacement amount to be corrected, even when there is a character element protruding downward, for example, such as "j" or "p" in a certain character row, the system in which the row is hardly and adversely affected by the character element can be realized.

Note that the image correction apparatus or the image correction method of the invention is not limited to the constitution described in the embodiment. For example, a system for performing correction on all of the vertical pixel columns constituting the image by referring to only the displacement amount to be corrected, which is calculated with respect to the character row including the largest integrated value based on the histogram of the starting points of the expanded character rows shown in Fig. 16 may be adopted. This is because the character row including the largest integrated value normally means the longest character row, and the displacement amount to be corrected is detected with respect to the character row and correction is performed, and thereby, a major part of the entire image can be corrected. Practically, by such constitution, the slant and meandering of the image can also be preferably corrected. Further, the processing can be performed more rapidly by calculating the starting positions with respect to all of the character rows constituting the image compared to the case where the displacement correction is performed based on their average value.'

Image correction is performed by using image correction apparatus 130 or the image correction method in the embodiment of the invention using random 20 business cards as samples. The number of characters subjected to OCR is 390 characters of telephone numbers and 1026 characters of mail addresses and URLs. After the image correction, OCR processing is performed by CPU 102 based on the image stored in first storage means 103, and, as a result of calculating the rate of the correctly recognized characters, in the entire of the telephone numbers, mail addresses and URLs in the business cards, relative to the correct reading rate when no correction is performed, about 25% of the correct reading rate can be improved.

By the way, in the embodiment of the invention, the function of display part 105 is not described specifically, however, by arranging the display part so as to display the acquired original image, the binarized image, etc., or messages such as an error message or an message representing necessary input contents to the user, a user-friendly apparatus constitution can be realized.

Note that, in the first embodiment or the second embodiment of the invention, the example in which the slant and meandering of the respective characters, numerals, etc. on the image read by the image correction apparatus are corrected is described, however, the image correctable by the image correction apparatus of the invention is not limited to that. Needless to add, for example, the image correction apparatus or the image correction method of the invention can correct the slant, meandering, distortion, or the like of the read image with respect to an original in which information such as barcodes and graphics in place of or in addition to characters, numerals and the like (such information is generically named as "character element" in the specification) aligned in a direction on the image.

### (Third Embodiment)

Next, as the third embodiment of the invention, an information equipment including the image correction apparatus or the image correction method of the invention will be described.

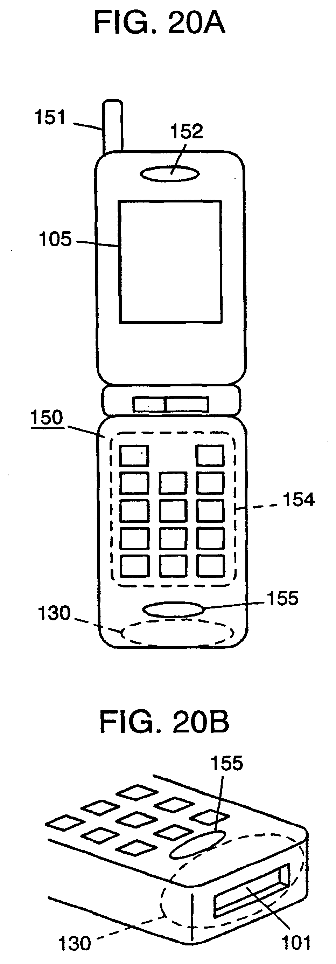

Since the used amount of memory can be reduced, processing can be performed rapidly, and the load on the computing part (CPU) can be reduced by using the image correction apparatus or the image correction method of the invention, mounting on portable information equipment and the like becomes easier. The example of mounting image correction apparatus 40, 130 on the information equipment such as a cellular phone device is shown in Fig. 20.

Fig. 20 is an outside drawing of cellular phone device 150 equipped with image correction apparatus 130, and Fig. 20A is a front view thereof and Fig. 20B is a perspective view of a main part showing an end part where image correction apparatus 130 is mounted.

Cellular phone device 150 has constitution in which image correction apparatus 130 is built-in in the publicly known cellular phone device including antenna part 151, speaker part 152, display part 105 such as an LCD, key part 154, and microphone part 155.

By mounting the image correction apparatus of the invention, a surface for reading information represented by the density of the characters, graphics, etc. of image input part 101 of image correction apparatus 130 is provided on the lower surface of cellular phone device 150, and thereby, very user-friendly image correction apparatus 130 built-in cellular phone device 150 can be provided.

Note that, in the embodiment, an example in which image correction apparatus 130 described in the second embodiment is mounted on cellular phone device 150 has been described, however, as a matter of course, mounting image correction apparatus 40 described in the first embodiment can exert the same effect.

As described above, since document information such as URLs and two-dimensional barcodes can be read and subjected to processing such as OCR by the cellular phone device equipped with the image correction apparatus of the invention, multifunctional information equipment such as a cellular phone device that has never been existed can be provided.

Needless to add, the information equipment here is not limited to the above described cellular phone device, but includes publicly known various kinds of information equipment such as a digital camera, compact personal computer, and PDA (personal digital assistant).

### Industrial Applicability

As described above, an image correction apparatus and an image correction method according to the invention has an advantage that the slant or meandering of character rows can be corrected and the distortion of the character element itself can also be corrected, and are useful as an image correction apparatus and an image correction method and the like for correcting the slant or meandering of character rows and the like produced in an image obtained by shooting an original such as a document by a hand scanner and the like.

## Claims

1. An image correction apparatus comprising:
an image input part to which an image including plural character element rows are input;
a row detection part for detecting a predetermined character element row from the plural character element rows;
a correction amount calculating part for performing calculation of a position correction amount in a column direction with respect to each pixel column on the predetermined character element row; and
a position correction part for correcting a position of each pixel column of the image so as to move it in the column direction based on the position correction amount calculated with respect to each pixel column in a predetermined direction.

2. The image correction apparatus according to claim 1, wherein the row detection part has a histogram generating part for generating an integrated histogram along a row direction of the image, and detects the longest character element row based on the integrated histogram.

3. The image correction apparatus according to claim 2, wherein the row detection part has a pixel position extracting part for extracting a pixel position where a value of the integrated histogram generated in the histogram generating part becomes the maximum, and detects the longest character element row based on the pixel position.

4. The image correction apparatus according to claim 3, wherein the row detection part has a range identifying part for identifying a pixel position range where the value of the integrated histogram falls within a predetermined range as a range of the longest character element row from the pixel position extracted in the pixel position extracting part.

5. The image correction apparatus according to claim 1, wherein the correction amount calculating part has an end position detection part for detecting an end position in the column direction with respect to each character element of the predetermined character element row, and calculates the position correction amount based on a displacement amount of the end position with respect to each of the character element rows.

6. The image correction apparatus according to claim 5, wherein the correction amount calculating part calculates the displacement amount based on an envelope curve connecting the end positions detected by the end position detection part with respect to each of the character elements.

7. An image correction apparatus comprising:
an image input part to which an image including plural character element rows are input;
a histogram generating part for generating an integrated histogram along a row direction of the image;
a pixel position extracting part for extracting a pixel position where a value of the integrated histogram generated in the histogram generating part becomes the maximum;
a range identifying part for identifying a pixel position range where the value of the integrated histogram falls within a predetermined range as a range of the longest character element row from the pixel position extracted in the pixel position extracting part;
an end position detection part for detecting an end position in the column direction in the image with respect to each character element of the longest character element row;
a position correction amount calculating part for calculating a displacement amount of the end positions with respect to each of the character elements based on an envelope curve connecting the end positions detected by the end position detection part with respect to each of the character elements; and
a position correction part for correcting the image with respect to each pixel column so as to move it in the column direction based on the position correction amount.

8. An image correction apparatus comprising:
an image input part to which a first image including plural character element rows are input;
an expanded row generating part for generating a second image including plural expanded rows by expanding the first image in the row direction;
a starting position detection part for detecting a starting position of the expanded row in the column direction with respect to each pixel column of the second image;
a correction amount calculating part for calculating a position correction amount in the column direction with respect to each pixel column of the second image; and
a position correction part for correcting a position of each pixel column of the first image so as to move it in the column direction based on the position correction amount.

9. The image correction apparatus according to claim 8, wherein the second image is a binarized image having brightness values expressed by a value of 0 or 1.

10. The image correction apparatus according to claim 9, wherein the starting position detection part performs detection of the starting position of the expanded row in the column direction by, while moving a pixel of interest in the column direction, detecting a brightness value of the pixel of interest with respect to each of the pixel columns, and, when equal to or more than a predetermined number of pixels having brightness values of 0 continue, setting a position where the pixel having the brightness value of 0 is detected for the first time as the starting position.

11. The image correction apparatus according to claim 10, wherein the starting position detection part performs detection of the starting position of the expanded row in the column direction with respect to each of plural expanded rows, and the correction amount calculating part calculates the position correction amount based on an average value of a starting position distribution of each of the plural expanded rows in the column direction.

12. An image correction apparatus comprising:
an image input part to which a binarized first image including plural character element rows are input;
an expanded row generating part for generating a second image including plural expanded rows by expanding the first image in a row direction;
a starting position detection part for, while moving a pixel of interest in a column direction, detecting a brightness value of the pixel of interest with respect to each pixel column of the second image, and, when equal to or more than a predetermined number of pixels having brightness values of 0 continue, detecting a position where the pixel having the brightness value of 0 is detected for the first time as a starting position of the expanded row;
a correction amount calculating part for calculating a position correction amount with respect to each of the pixel columns of the second image based on an average value of a starting position distribution of the plural expanded rows in the column direction; and
a position correction part for correcting the first image with respect to each of the pixel columns so as to move it in the column direction based on the position correction amount.

13. Information equipment comprising the image correction apparatus according to any one of claims 1 to 12.

14. A cellular phone device comprising the image correction apparatus according to any one of claims 1 to 12.

15. An image correction method comprising:
a first step for detecting a predetermined character element row from an image including plural character element rows;
a second step for calculating a position correction amount with respect to each pixel column of the predetermined character element row; and
a third step for correcting the image with respect to each pixel column so as to move it in the column direction based on the position correction amount.

16. An image correction method comprising:
a first step for generating a second image including plural expanded rows by expanding a first image including plural character element rows in a row direction;
a second step for detecting a starting position of the expanded row in a column direction with respect to each pixel column of the second image; and
a third step for correcting a position of the first image so as to allow starting positions of the expanded row in the column direction to align with each other based on information of the starting positions of the expanded row in the column direction.
